# EUROPÄISCHE PATENTSCHRIFT

(11) **EP 3 317 878 B1**
(45) Veröffentlichungstag und Bekanntmachung des Hinweises auf die Patenterteilung: **25.03.2020**
(21) Anmeldenummer: 16736029.6
(22) Anmeldetag: 30.06.2016
(51) Int. Cl.: G10L 21/0208

(54) **VERFAHREN UND VORRICHTUNG ZUM ERZEUGEN EINER DATENBANK**
METHOD AND DEVICE FOR CREATING A DATABASE
PROCÉDÉ ET DISPOSITIF POUR CRÉER UNE BASE DE DONNÉES

(30) Priorität: 30.06.2015 EP 15174634
(43) Veröffentlichungstag der Anmeldung: 09.05.2018
(73) Patentinhaber: Fraunhofer-Gesellschaft zur Förderung der angewandten Forschung e.V., 80686 München (DE)
(72) Erfinder: SPORER, Thomas, 90766 Fürth (DE); CLAUSS, Tobias, 53773 Hennef (DE); LIEBETRAU, Judith, 36433 Leimbach (DE); KEPPLINGER, Sara, 98693 Ilmenau (DE); KEPPLINGER, Dietmar, 5301 Eugendorf (AT)
(74) Vertreter: Pfitzner, Hannes
(86) Internationale Anmeldenummer: PCT/EP2016/065392
(87) Internationale Veröffentlichungsnummer: WO 2017/001607

(56) Entgegenhaltungen:
- DE-A1- 10 134 471
- XAVIER VALERO ET AL: "Hierarchical Classification of Environmental Noise Sources Considering the Acoustic Signature of Vehicle Pass-Bys", ARCHIVES OF ACOUSTICS., Bd. 37, Nr. 4, 1. Januar 2012 (2012-01-01) , XP055297364, PL ISSN: 0137-5075, DOI: 10.2478/v10168-012-0054-z
- LIEBETRAU JUDITH ET AL: "Quantifying Auditory Perception: Dimensions of Pleasantness and Unpleasantness", AES CONVENTION 138; MAY 2015, AES, 60 EAST 42ND STREET, ROOM 2520 NEW YORK 10165-2520, USA, 6. Mai 2015 (2015-05-06), XP055297473,
- Boris Defréville ET AL: "Unpleasantness of urban sound environment based on identification of sources: a perceptive and an acoustic approach", Forum Acusticum 2005 Budapest, 1. Januar 2005 (2005-01-01), Seiten 1847-1851, XP055297386, Budapest Gefunden im Internet: URL:http://webistem.com/acoustics2008/acou stics2008/cd1/data/fa2005-budapest/paper/3 93-0.pdf [gefunden am 2016-08-24]

## Beschreibung

Ausführungsbeispiele der vorliegenden Erfindung beziehen sich auf ein Verfahren und eine Vorrichtung und Erzeugen einer Datenbank mit zwischengespeicherten Aufnahmen mehrere Signalklassen.

Geräusche lassen sich beispielsweise in Signalklassen, wie z. B. störendes Geräusch und nicht-störendes Geräusch untergliedern. Auch eine weitere Untergliederung z.B. in stark störendes Geräusch und weniger stark störendes Geräusch wäre denkbar.

Störgeräusche sind nicht immer einfach zu klassifizieren. Hintergrund hierzu ist, dass es unterschiedliche Faktoren gibt, die Einfluss darauf haben, dass ein Geräusch als Störgeräusch wahrgenommen wird. Beispielsweise würde ein Vogel, auch wenn sein Gezwitscher laut ist (objektive messbarer Parameter: Schalldruckpegel) und es sich deutlich von der sonstigen Umgebungsgeräuschen abhebt (objektive messbarer Parameter: Dynamikfaktor), subjektiv nicht als Störgeräusch wahrgenommen. Ein wesentlich leiseres Flugzeug, das passiert, würde hingegen von viel mehr Probanden als Störgeräusch wahrgenommen als der eben angesprochene Vogel.

Die Konsequenz hieraus ist, dass, wenn es darum geht, eine Umgebung, wie z. B. ein Hotel, einen Wellnessbereich eines Hotels oder einen Arbeitsplatz hinsichtlich Störgeräuschen zu untersuchen, um beispielsweise eine Vorhersage der Geräuschbewertung zu ermöglichen, man nach derzeitigen Ansätzen nicht darum herumkommt, die Bewertung Probanden zu übergeben.

Eine rein automatisierte Auswertung beispielsweise hinsichtlich der absoluten Lautheit oder hinsichtlich von Pegelanstiegen dient zwar als erster Hinweis, genügt aber nicht zur endgültigen Beurteilung. Deshalb besteht der Bedarf nach einem verbesserten Ansatz.

DIE DE10134471 A1 beschreibt, wie ausgehend von Spektren eine Signalklassifizierung erfolgen kann. Die Veröffentlichung mit dem Titel Xavier Valero et al.: "Hierarchical Classification of Environmental Noise Sources Considering the Acoustic Signature of Vehicle Pass-Bys", Archives of Acoustics, Bd. 37, Nr. 4, Seiten 423-434, 1. Januar 2012 sowie die Veröffentlichung mit dem Titel Liebetrau Judith et al.: "Quantifying Auditory Perception: Underlying Dimensions of Pleasantness and Unpleasantness", AES Convention 138, Warsaw, Poland, Seiten 1-9, New York, USA, 6. Mai 2015, beschreiben beide Möglichkeiten zur Signalanalyse.

### Hauptaspekt

Aufgabe der vorliegenden Erfindung ist es, ein Konzept zur Klassifizierung von Geräuschen, wie subjektiven Störgeräuschen zu schaffen.

Die Aufgabe wird durch die Gegenstände der unabhängigen Patentansprüche gelöst.

Ausführungsbeispiele der vorliegenden Erfindung schaffen ein Verfahren zum Erzeugen einer Datenbank. Das Verfahren umfasst die Schritte "Empfangen von Umgebungsgeräuschen", die beispielsweise ein Störgeräusch umfassen, und "zwischengespeicherte Umgebungsgeräusche für ein mitwanderndes Zeitfenster", wie z B. 30 oder 60 Sekunden oder bevorzugt mehr als 5 Sekunden. Alternativ hierzu wäre es auch denkbar, dass das Verfahren den Schritt des "Ableitens eines Parametersatzes zu den Umgebungsgeräuschen" und des "Zwischenspeicherns des Parametersatzes für das mitwandernde Zeitfenster" umfasst. Die zwischengespeicherten Umgebungsgeräusche oder der zwischengespeicherte Parametersatz werden allgemein als Aufnahme bezeichnet. Des Weiteren umfasst das Verfahren den Schritt des "Erhaltens eines Signals", das eine Signalklasse (z. B. Störgeräusch) einer Mehrzahl von Signalklassen (Störgeräusch und nicht-störendes Geräusch) in den Umgebungsgeräuschen identifiziert. Der dritte Basisschritt ist das "Speichern, als Reaktion auf das Signal, der zwischengespeicherten Aufnahmen" in einen Speicher, wie z. B. einem internen oder einem externen Speicher. Diese Schritte des Erhaltens und Speicherns werden wiederholt, um die Datenbank aufzubauen, die eine Mehrzahl von zwischengespeicherten Aufnahmen für die gleiche Signalklasse aufweist.

Ausführungsbeispielen der vorliegenden Erfindung liegt die Erkenntnis zugrunde, dass es durch eine Vorrichtung, welche kontinuierlich aufnimmt und relevante Stellen in der Umgebung speichert, möglich ist, eine Datenbank aufzubauen, in welcher die Aufnahme bzw. Charakteristika, wie z. B. ein Audiofingerprint oder psychoakustische Parameter der Aufnahme gespeichert sind, so dass eine Wiedererkennung einer derartigen Tonsequenz zum späteren Zeitpunkt möglich ist. Hierbei geht das Konzept davon aus, dass der Schritt des "Erkennens eines subjektiven Störgeräusches bzw. eines Geräuschs einer Klasse" durch einen Menschen durchgeführt wird, der beispielsweise über einen Taster oder eine andere Eingabeschnittstelle das Störgeräusch bzw. die Signalklasse identifiziert bzw. markiert. Dieses Signal wird als Indikator dafür genommen, aus der aktuellen, kontinuierlich laufenden Aufname die Sequenz herauszuschneiden bzw. die Charakteristika zu extrahieren und in einen Speicher mit der aufzubauenden Datenbank abzulegen. Somit ist es auf einfache Art und Weise möglich, eine Bibliothek mit Störgeräuschen oder Klassifikatoren zur eindeutigen Zuordnung schallbeschreibender Parameter aufzubauen, was im Nachgang die Vorhersage subjektiver Geräuschwahrnehmung ermöglicht.

Entsprechend Ausführungsbeispielen kann das subjektive Störgeräusch durch einen Parameter, wie z. B. einen Audio-Fingerabdruck, umfassend Einzelparameter wie Lautheit, Dynamik, Umfang, Dynamikanstieg, Frequenzspektrum, Monotonie oder einen wiederholenden Charakter, oder auch durch psychoakustische Parameter, wie Schärfe, Rauheit, Tonalität, Schwankungsstärke oder Lautheit beschrieben werden. Deshalb umfasst das Verfahren entsprechend weiteren Ausführungsbeispielen den Schritt des Ermittelns eines Audiofingerabdrucks für die zwischengespeicherte Aufnahme oder des Ermittelns von psychoakustischen Parametern. Im Regelfall reicht es aus, wenn die Aufnahme oder der Audiofingerabdruck in die Datenbank gespeichert wird, während die psychoakustischen Parameter Zusatzinformationen darstellen. Vorteilhaft am Audiofingerabdruck ist, dass die Aufnahmespeicherung anonymisiert erfolgt.

In dem Einzelschritt des Erhaltens eines Signals von einer Benutzerschnittstelle, wie z. B. einem Taster, kann auch ein weiteres alternatives oder additives Signal erhalten werden, das das aktuelle identifizierte Steuergeräusch subjektiv bewertet. Bei dieser subjektiven Bewertung handelt es sich um die Einordnung der Audiosignale in Signalklassen (z. B. wenig störend oder stark störend). Hierbei wird dann diese subjektive Bewertung zusammen mit dem jeweiligen Teil bzw. dem Parameter mitgespeichert.

Entsprechend weiteren Ausführungsbeispielen kann auch ein Zeitstempel zusätzlich zu dem Teil bzw. dem Parameter mitgespeichert werden. Auch wäre es entsprechend wiederum anderen weiteren Ausführungsbeispielen denkbar, dass eine aktuelle Ortsinformation, z B. von einem GPS-Empfänger mitgespeichert wird. Um die Datenbank nicht zu groß werden zu lassen, wäre auch anzudenken, ob die zwischenzuspeichernden Daten in datenreduzierter Weise gespeichert werden.

An dieser Stelle sei angemerkt, dass entsprechend einem Ausführungsbeispiel der Speicher bzw. die Datenbank in der jeweiligen Vorrichtung, die das Verfahren ausführt, direkt enthalten ist oder entsprechend einem anderen Ausführungsbeispiel auch extern vorgesehen sein kann.

Ein weiteres Ausführungsbeispiel bezieht sich auf eine entsprechende Vorrichtung. Diese Vorrichtung umfasst ein Mikrofon zur kontinuierlichen Aufnahme, einen Zwischenspeicher zum Zwischenspeichern, eine Schnittstelle zum Empfangen des Signals sowie einen weiteren Speicher zum Speichern der zu einer Signalklasse gehörenden Aufnahme (Audiodatei, Audiofingerprint oder psychoakustische Parameter) zugehörig zu dem identifizierten Störgeräusch. Diese Vorrichtung kann entsprechend weiteren Ausführungsbeispielen eine Eingabeschnittstelle, wie z. B. einen Taster aufweisen, über welchen das Vorliegen eines subjektiven Störgeräuschs bestätigt bzw., allgemein, die Einordnung eines Geräusches in eine Signalklasse erfolgen kann. Auch können die Eingabemittel um die Möglichkeit der Einordnung eine aus mehreren Signalklassen, d.h. um eine Bewertung erweitert sein. Entsprechend wiederum weiteren Ausführungsbeispielen kann die Vorrichtung auch eine Kommunikationsschnittstelle aufweisen, über welche der extern angeordnete Speicher (externe Datenbank) verbunden ist.

Weiterbildungen sind in den Unteransprüchen definiert.

### Weiterer Aspekte

Ausführungsbeispiele der vorliegenden Erfindung schaffen ein Verfahren zum Erkennen eines Geräusches einer Signalklasse (z. B. Störgeräusch) einer Mehrzahl von Signalklassen (z. B. Störgeräusch und nicht störendes Geräusch). Das Verfahren umfasst die Schritte "Empfangen von Umgebungsgeräuschen" und "Feststellen, ob die Umgebungsgeräusche oder ein von den Umgebungsgeräuschen abgeleiteter Parametersatz eine vordefinierte Regel erfüllt, die die Signalklasse der Mehrzahl der Signalklassen beschreibt". Ausgehend hiervon wird der Schritt des "Protokollierens, dass die vordefinierte Regel erfüllt war", das "Aufzeichnen der empfangenen Umgebungsgeräusche für ein mitwanderndes Zeitfenster", das "Ableiten eines Parametersatzes von den Umgebungsgeräuschen für das mitwandernde Zeitfenster und Speichern des Parametersatzes" oder das "Aussenden eines Aktivierungssignals für eine weitere Vorrichtung zum Erkennen eines Geräusches" durchgeführt.

Ausführungsbeispielen dieses Aspekts liegt die Erkenntnis zugrunde, dass es ausgehend von einer Datenbank, wie sie mittels der oben beschriebenen Vorrichtung gemäß dem oben beschriebenen Verfahren ermittelbar ist, z.B. durch Vergleichen der aktuellen Geräuschumgebung mit eben den Geräuschen aus der Datenbank bzw. mit der Datenbank erhaltenen oder in der Datenbank gespeicherten Parametern, wie z. B. Audiofingerabdrücken, möglich ist, das Vorhandensein von subjektiv empfundenen Störgeräuschen zu erkennen. Dieses Verfahren kann automatisiert ausgeführt werden und ermöglicht die Prognose der Bewertung von einer Geräuschkulisse (Zwitschern des Vogels vs. Klimaanlage) nur anhand von einer hinterlegten Datenbank, ohne jegliche subjektive Bewertung vom Menschen durchführen zu müssen.

Das Erkennen eines Regel-Matches kann beispielsweise durch Vergleichen der Umgebungsgeräusche mit vorher zwischengespeicherten Umgebungsgeräuschen oder durch Vergleichen von aktuell abgeleiteten Parameterdatensätzen (Audiofingerabdruck) mit vorher ermittelten Parameterdatensätzen oder durch Ableiten von psychoakustischen Parametern und Vergleichen mit vorgegebenen Schwellwerten für selbige erfolgen.

Ein weiteres Ausführungsbeispiel bezieht sich auf eine Vorrichtung zum Erkennen eines Geräusches einer Signalklasse einer Mehrzahl von Signalklassen. Die Vorrichtung umfasst ein Mikrofon zum kontinuierlichen Mithören von aktuellen Umgebungsgeräuschen, einen Prozessor zum Vergleichen der aktuellen Umgebungsgeräusche mit in einer Datenbank gespeicherten Daten (Aufnahme von Störgeräuschen oder die Störgeräusche beschreibenden Parameter) und eine Schnittstelle zum Ausgeben einer Information, sobald in der aktuellen Umgebung ein Störgeräusch identifiziert ist. Hierbei können die Daten, wie z. B. die vorher ermittelten Aufnahmen, und die vorher ermittelten Audiofingerabdrücke oder die vorher festgelegten Schwellwerte für die psychoakustischen Parameter entweder intern gespeichert werden oder entsprechend anderen Ausführungsbeispielen von extern über eine Datenbank, wie sie z. B. entsprechend des weiteren Aspekts ermittelt werden kann, eingelesen werden.

Ausgehend von den erkannten subjektiven Störgeräuschen bzw. einer Signalklasse kann diese Information entweder alleine oder in Kombination mit einer Zeitangabe, einer Ortsangabe oder einer Einstufung des Störgeräusches in eine der Klassen (eine entsprechende Störgruppe: leicht stören, stören, stark stören) weiterverarbeitet werden. Diese Informationen werden entsprechend einem bevorzugten Ausführungsbeispiel an eine externe Datenbank ausgegeben.

Da in diesem Ausführungsbeispiel nur die Bewertung eines Orts bzw. diese eine Position angedacht ist, ist es entsprechend weiteren Ausführungsbeispielen auch denkbar, diese Wertung auf mehrere Positionen, z. B. mehrere Positionen in einem Raum bzw. einer Outdoor-Umgebung, d. h. mehrere benachbarte Positionen (z.B. verteilt über die Stadt) auszuweiten. Deshalb schafft ein weiteres Ausführungsbeispiel ein Verfahren, bei welchem die Schritte "Aufnehmen", "Vergleichen" und "Ausgeben" für zwei benachbarte Positionen" wiederholt werden. Wenn dann die Information für zwei benachbarte Positionen vorliegt, kann auch eine Beziehung zwischen den Aufnahmen für die erste und die zweite Position ermittelt werden, um beispielsweise eine Bewegung, eine räumliche Ausdehnung oder eine Richtung des als subjektiv wahrgenommenen Störgeräuschs zu bestimmen.

Entsprechend einem weiteren Ausführungsbeispiel ist es analog zum Erkennen von Störgeräuschen auch denkbar, eine andere Sequenz, wie z. B. einen Steuerbefehl zu erkennen, ausgehend von welchem dann ein entsprechendes Steuersignal ausgegeben wird. Hierbei kann die dem Steuersignal zugeordnete Aufnahme entweder ein Sprachkommando sein oder, wie oben beschrieben, ein als Störgeräusch eingestuftes akustisches Signal. Das Steuersignal wird beispielsweise durch eine Vorrichtung, die das Verfahren ausführt, selbst ausgegeben, so dass beispielsweise eine Aufnahme gestartet wird oder auch eine externe Vorrichtung, wie z. B. eine weitere an einer weiteren Position aufgestellte Vorrichtung, die durch das Steuersignal eben in den Aufnahmemodus geschaltet wird.

Entsprechend weiteren Ausführungsbeispielen kann die oben skizierte Vorrichtung auch eine Kommunikationsschnittstelle, einmal zum Kommunizieren mit einer Datenbank zum Einlesen der vorher ermittelten Störgeräusche bzw. Parameter oder zum Ausgeben der Information über die Störgeräusche, umfassen. Entsprechend wiederum weiteren Ausführungsbeispielen ist es auch möglich, dass über diese Kommunikationsschnittstelle die Vorrichtung mit einer weiteren Vorrichtung kommuniziert, so dass die Störgeräusche über zwei benachbarte Positionen erhalten bzw. analysiert werden.

Ein Ausführungsbeispiel eines Unteraspekts schafft ein Verfahren zum Analysieren von Geräuschen einer Signalklasse. Das Verfahren weist den Schritt des kontinuierlichen Aufnehmens von aktuellen Umgebungsgeräuschen an einer ersten und einer zweiten Position auf. Hierbei versteht sich unter Aufnehmen wiederum entweder das direkte Aufnehmen der Umgebungsgeräusche oder das Ableiten von einem Parametersatz zugehörig zu den Umgebungsgeräuschen, wie z. B. einem Audiofingerabdruck oder psychoakustischen Parametern. Ferner wird in jeder Aufnahme ein Vergleich mit einer vorher erhaltenen Aufnahme von einem subjektiv wahrgenommen Störgeräusch oder mit einem das Störgeräusch beschreibenden Parameter durchgeführt, um je Position (erste und zweite Position) das Störgeräusch zu identifizieren. Aus den zwei Aufnahmen (erste und zweite Aufnahme), welche das eine Störgeräusch in unterschiedlichen Positionen umfasst, kann eine Beziehung zwischen den Aufnahmen ermittelt werden, um so im Resultat das Störgeräusch beispielsweise hinsichtlich seiner Position, Ausdehnung oder Bewegung genauer analysieren zu können.

Ausführungsbeispielen dieses Aspekts liegt die Erkenntnis zugrunde, dass es möglich ist durch die Relation zweier Aufnahmen von ein und demselben Störgeräusch an zwei unterschiedlichen Positionen eine erweiterte Auskunft über das Störgeräusch an sich zu gewinnen. Hierzu werden erst einmal die Störgeräusche in der jeweiligen Umgebung (d. h. an einer ersten Position und an einer zweiten Position) identifiziert und sobald sie identifiziert sind, in Relation zueinander gesetzt. Hierbei ist es vorteilhafterweise möglich, entweder eine Auskunft über eine Bewegung des Störgeräuschs oder über eine Ausdehnung des Störgeräuschs oder über eine Ausbreitungsrichtung des Störgeräuschs zu erhalten. Weiter ist es auch möglich, zwischen einem lokalen Störgeräusch, d. h. nur in einer Position und einem globalen Ereignis, d. h. eines, welches an mehreren Positionen auftritt, zu unterscheiden. Durch dieses Verfahren ist die Erkennung von charakteristischen Geräuschevents und deren Ausbreitung zur Bewegung möglich.

Entsprechend Ausführungsbeispielen erfolgt der Schritt des Ermittelns einer Beziehung zwischen der ersten und einer zweiten Aufnahme dadurch, dass eine Pegeldifferenz zwischen der ersten und der zweiten Aufnahme analysiert wird. Alternativ hierzu bzw. additiv hierzu wäre es auch möglich, dass bei dem Schritt des Ermittelns der Beziehung ein zeitlicher Versatz, d. h. eine Latenz oder ein Laufzeitversatz zwischen dem Ereignis in zwei ermittelten Aufnahmen an den zwei unterschiedlichen Positionen bestimmt wird. Zusätzlich können die zwei Aufnahmen auch hinsichtlich Frequenzunterschieden und Hall-Effekten ausgewertet werden. Durch all diese Analyseparameter ist es möglich, einen Abstand der Geräuschquelle von der Aufnahmeposition zu bestimmen, da der Schall im Regelfall mit zunehmendem Abstand kleiner wird und/oder es zu Frequenzverschiebungen, beispielsweise derart, dass die oberen Frequenzen ausgelöscht werden, kommt.

Entsprechend weiteren Ausführungsbeispielen umfasst das Verfahren das Analysieren der Audioereignisse bzw. jeweiligen Quellen hinsichtlich eines Abstands zwischen einer ersten und einer zweiten Position, das Analysieren hinsichtlich einer Bewegung einer Quelle des subjektiven Störgeräuschs und/oder das Analysieren hinsichtlich einer Größe der Quelle des subjektiven Störgeräuschs. Diese drei Analysen basieren auf der Auswertung der Beziehung zwischen der ersten und der zweiten Aufnahme, d. h. aus dem Vergleich beispielsweise von oben genannten Faktoren.

Auch bezüglich dieses Aspekts sei angemerkt, dass das kontinuierliche Aufnehmen in bevorzugter Weise über ein mitwanderndes Zeitfenster erfolgt. Des Weiteren sei es, wie bei obigem Aspekt, auch denkbar, dass das zu vergleichende Geräusch von extern eingelesen wird.

An dieser Stelle sei auch darauf hingewiesen, dass das Verfahren natürlich auf dritte Positionen erweitert werden kann.

Bei Ausführungsbeispielen entsprechend diesem Aspekt kann die Aufnahme an einer zweiten Position gestartet werden, wenn in einer ersten Position ein entsprechendes Störsignal ermittelt wurde, umso eine zeitliche Analyse des sich ausbreitenden Störsignals zu ermöglichen.

Ein weiteres Ausführungsbeispiel bezieht sich auf ein System zum Analysieren von Signalen einer Signalklasse, Das System umfasst zwei Einheiten mit je einem Mikrofon zur kontinuierlichen Aufnahme von aktuellen Umgebungsgeräuschen. Die zwei Einheiten können an unterschiedlichen Positionen, z. B. an benachbarten Positionen positioniert sein. Hierbei wird wiederum unter "Aufnahme" sowohl die direkte Aufnahme des Umgebungsgeräusches als auch das Ableiten von Parametern, wie z. B. einem Audiofingerprint verstanden. Ferner umfasst das System zumindest einen Prozessor, der entweder in einer ersten oder der zweiten Einheit integriert sein kann und ausgebildet ist, durch Vergleichen der ersten und der zweiten Aufnahme der ersten und der zweiten Einheit mit mindestens einer vorher erhaltenen Aufnahme / Audiofingerabdruck des Signals der Signalklasse bzw. des Signal der Signalklasse beschreibenden Parametern, das Geräusch zu identifizieren. Der Prozessor ist ferner ausgebildet, eine Beziehung zwischen der ersten und der zweiten Aufnahme zu ermitteln.

Entsprechend Ausführungsbeispielen können die zwei Einheiten über eine Kommunikationsschnittstelle, wie z. B. eine Funkschnittstelle miteinander verbunden sein.

Entsprechend weiteren Ausführungsbeispielen wird ein Computerprogramm zur Ausführung einer der oben beschriebenen Verfahren geschaffen.

Ausführungsbeispiele der vorliegenden Erfindung werden nachfolgend anhand der beiliegenden Zeichnungen erläutert. Es zeigen:
- Fig. 1a: ein Flussdiagramm zur Illustration des Verfahrens nach Aspekt 1 "Aufbauen einer Datenbank" in der Basisvariante;
- Fig. 1b: ein Flussdiagramm zur Illustration eines erweiterten Verfahrens gemäß Aspekt 1;
- Fig. 1c bis 1f: Varianten für Vorrichtungen zu Aspekt 1;
- Fig. 2a: ein Flussdiagramm zur Illustration eines Verfahrens entsprechender Basisvarianten zum Aspekt 2; "Erkennung von Geräuschen zu einer Signalklasse";
- Fig. 2b: ein Flussdiagramm zu einem erweiterten Ausführungsbeispiel nach Aspekt 2;
- Fig. 2c: ein schematisches Blockschaltbild einer Vorrichtung zu Aspekt 2;
- Fig. 3a: ein Flussdiagramm zur Illustration des Verfahrens einer Basisvariante nach Aspekt 3 "Analyse von Geräuschen einzelner Signalklassen"; und
- Fig. 3b: ein schematisches Blockschaltbild einer Vorrichtung zu Aspekt 3.

Bevor nachfolgend Ausführungsbeispiele der vorliegenden Aspekte im Detail erläutert werden, sei darauf hingewiesen, dass gleichwirkende Elemente und Strukturen mit gleichen Bezugszeichen versehen sind, so dass eine Beschreibung derer aufeinander anwendbar bzw. austauschbar ist.

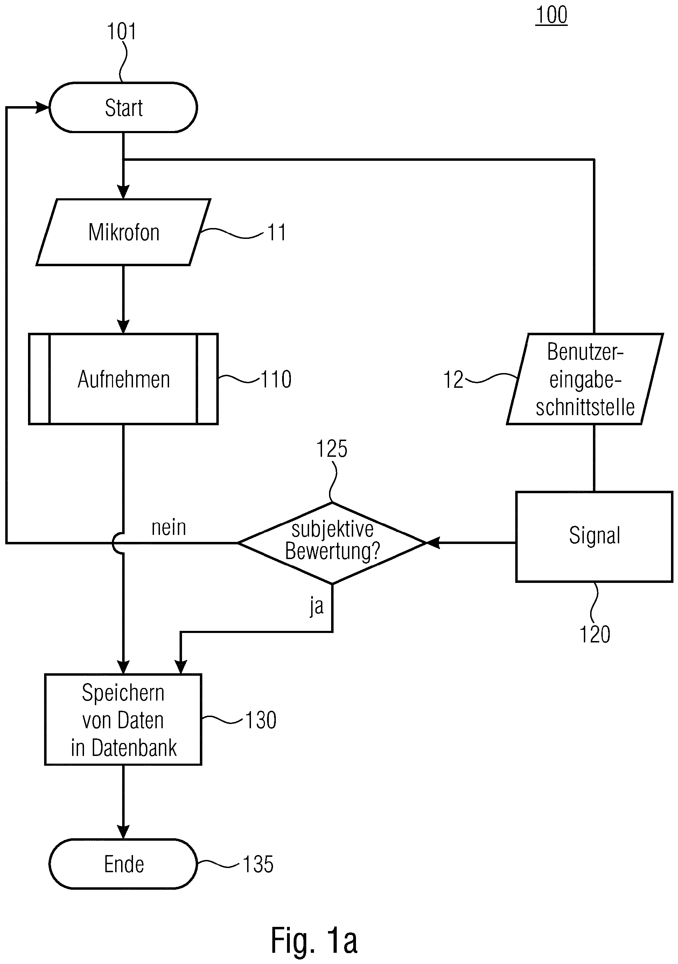

Fig. 1a zeigt ein Verfahren 100 zum Aufbauen einer Datenbank mit den Schritten: "Empfangen und Aufnehmen 110 unter Zuhilfenahme eines Mikrofons 11 und Signalempfangen" 120. Wenn das Signal 120 empfangen ist (siehe Entscheidungsstelle 125) wird die Aufnahme aus dem Schritt 110 in einer Datenbank gespeichert, was anhand des Schrittes 130 illustriert ist. Dieser Schritt 130 stellt im Wesentlichen das Ende des Basisverfahrens 100 dar (vgl. Endpunkt 135).

An dieser Stelle sei zum Schritt "Aufnehmen 110" angemerkt, dass bei Aufnehmen im Regelfall ein Unterschritt des Codierens vorgesehen sein kann. Hierbei kann das Codieren auch derart ausgeprägt sein, dass ein sogenannter Audiofingerabdruck, also in Ableitung von charakteristischen Parametern für die Aufnahme, erhalten wird. Dieser Audiofingerabdruck ist im Vergleich zu einer Aufnahme so stark komprimiert, dass eine Anonymisierung vollzogen ist, wobei der Audiofingerabdruck es dennoch zulässt, ein vergleichbares Geräusch, d. h. also ein Geräusch derselben Klasse anhand des Audiofingerabdrucks wiederzuerkennen. Im Allgemeinen kann ein Audiofingerabdruck derart beschrieben werden, dass dieser eine Darstellung eines Audiosignals ist, welche alle wesentlichen Eigenschaften des Audiosignals repräsentieren, so dass eine nachfolgende Klassifizierung möglich ist. Ein Audiofingerabdruck ist im Regelfall nicht ausreichend, um eine Decodierung zu den echten Audiosignalen zu ermöglichen und schützt so die Privatsphäre. Analog bzw. parallel zum Codieren kann auch ein Unterschritt des Ableitens von Parametern, wie z. B. psychoakustischen Parametern, vorgesehen sein, die die Aufnahme beschreiben.

Der Aufnahmevorgang 110 kann auch als Ringpuffer beschrieben werden, da die Aufnahme sich im Regelfall immer wieder überschreibt und somit nur ein vorbestimmter Zeitraum, wie z. B. 120, 60 oder 30 Sekunden oder im Allgemeinen größer 5 Sekunden zwischengespeichert wird. Dieser Ringpuffer bietet nebenbei auch noch den Vorteil, dass entsprechende Privatsphäre-Anforderungen genügt wird. Dieses Zeitfenster des Umgebungsgeräusches für den letzten Zeitraum wird bei Erhalten des Signals 120 mit dem Schritt 130 in einen weiteren Speicher (z.B. eine Datenbank) gespeichert bzw. final abgespeichert, so dass es auch noch zu einem späteren Zeitpunkt zur Verfügung steht. Um effektiv die Datenbank aufzubauen erfolgt das Ausführen des Verfahren 100 repetitive für mehrere Signale einer oder unterschiedlicher Signalklassen.

Dieses Verfahren 100 hat den Zweck, eine Datenbank aufzubauen, in welcher subjektive Störgeräusche empfangen (im Sinne von aufgenommen) über das Mikrofon 11 identifiziert sind. Das Identifizieren erfolgt unter Zuhilfenahme eines durch den Benutzer durchgeführten Schritts, der beispielsweise über einen Taster 12 (bzw. allgemein eine Benutzereingabeschnittstelle 12) den Schritt "Signalausgeben 120" ausführt, wenn der Benutzer ein Störgeräusch in der Umgebung erkannt hat. Da das Mikrofon 110 die Umgebungsgeräusche mithört und diese mit dem Schritt 110 zwischengespeichert werden, sind diese Störgeräusche doch aufgenommen, so dass die zwischengespeicherte Aufnahme oder ein Teil davon in den festen Speicher zum Aufbau der Datenbank gespeichert werden kann (vgl. Schritt 130). Für den Fall, dass vom Benutzer kein Störgeräusch erkannt wird, wird das Verfahren wiederholt durchgeführt, was anhand des Pfeiles von der subjektiven Bewertung (Entscheidungselement 125) zu dem Startpunkt 101 illustriert ist.

Dieses Verfahren hat den Vorteil, dass so eine ausreichend breite Datenbasis aufgebaut werden kann, die eine Vielzahl an Aufnahmen bzw. Parametern wie Audiofingerprints umfasst, welche zu subjektiven wahrgenommenen Störgeräuschen zugeordnet sind.

An dieser Stelle sein angemerkt, dass sich hierdurch eine Abhängigkeit des Zeitpunkts des Signals zu dem Zeitfenster ergibt. Beispielsweise entsteht die Abhängigkeit dadurch, dass der Anfang des Zeitfensters zu dem Zeitpunkt des Signals in einem festen Abstand, wie z. B. 30 oder 60 Sekunden vor dem Zeitpunkt des Signals liegt. Weiter kann auch das Ende des Zeitfensters von dem Zeitpunkt des Signals abhängig sein, so dass beispielsweise ein Zeitpunkt des Signals und Ende des Zeitfensters zusammenfallen oder ein zeitlicher Abstand von 5 Sekunden (Ende vor dem Zeitpunkt des Signals) besteht. Im Allgemeinen ist die Abhängigkeit derart gewählt, dass das Aufnahmezeitfenster immer dem Zeitpunkt des Signals vorausgeht, wobei das Signal auch innerhalb des Zeitfensters liegen kann.

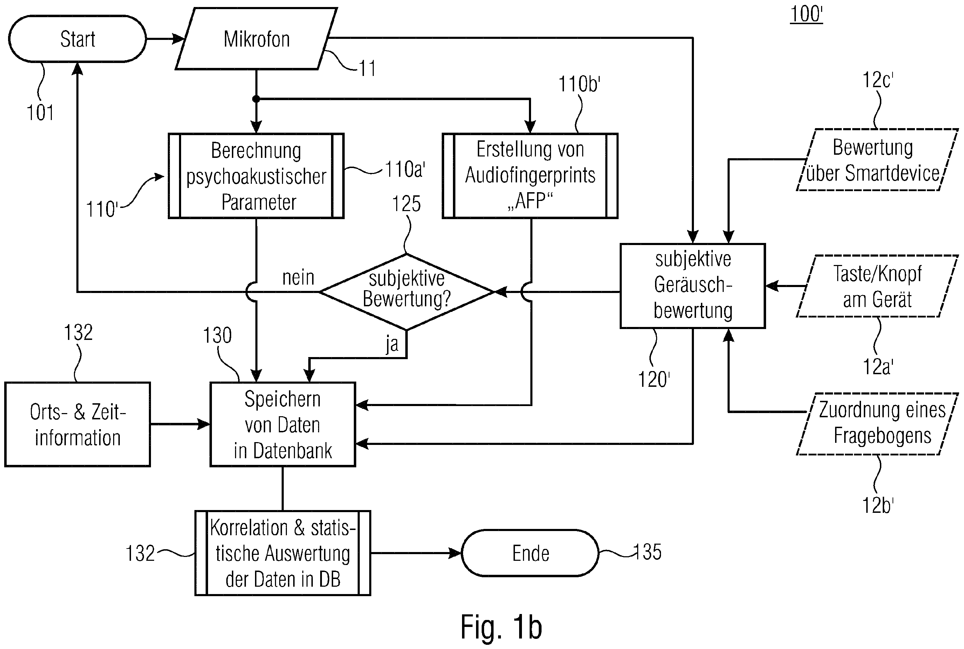

Fig. 1b zeigt ein erweitertes Verfahren 100', welches ebenfalls das Aufbauen einer Datenbank, hier allerdings mit erweiterten Informationen ermöglicht. Das Verfahren 100' basiert im Wesentlichen auf dem Verfahren 100 und ist durch Start 101 und Ende 135 in seinem Ablauf beschränkt. Folglich umfasst das Verfahren 100' ebenfalls die Basisschritte des Aufnehmens 110', des Empfangens 120' des Signals bezüglich einer subjektiven Geräuschbewertung bzw. allgemein bezüglich der Einordnung des empfangenen Signals in eine Signalklasse (z. B. das Störgeräusch) ausgehend von einer Mehrzahl von Signalklassen (z. B. nicht-störendes Geräusch, leicht störendes Geräusch und stark störendes Geräusch) sowie des Speicherns der zwischengespeicherten Aufnahme 130, z. B. über eine Datenbank. Ebenfalls sind die Schritte 130 und 120' über den Entscheidungspunkt 125 verbunden.

In diesem Ausführungsbeispiel ist der Schritt des Aufnehmens 110' in zwei Unterschritte, nämlich 110a' und 110b' untergliedert. Der Schritt 110a bezieht sich auf das Berechnen von psychoakustischen Parametern, wie z. B. einer Rauheit, einer Schärfe, einer Lautheit, einer Tonalität und/oder einer Schwankungsstärke. Der Schritt 110b reduziert sich auf das Ermitteln eines Audiofingerabdrucks, der die Aufnahme beschreibt, so dass die charakteristischen Merkmale später anhand des Audiofingerabdrucks wiedererkannt werden können.

Zur Durchführung des Schritts 120' der subjektiven Geräuschbewertung kann es unterschiedliche Eingabemittel geben. Diese sind "Bewertung über eine Taste bzw. einen Knopf an dem Gerät, das das Verfahren 100' ausführt (vgl. Bezugszeichen 12a', Zuordnung einer subjektiven Geräuschbewertung über einen Fragebogen (vgl. Bezugszeichen 12b' oder Bewertung über ein Smartdevice (vgl. Bezugszeichen 12c'). Diese drei Bewertungsvarianten 12a', 12b' und 12c' sind entweder allein oder in Kombination einsetzbar, um den Schritt der subjektiven Geräuschbewertung 120' durchzuführen. Sobald eine Bewertung vorliegt (vgl. Entscheidungspunkt 125) werden die psychoakustischen Parameter (vgl. Bezugszeichen 110a') und/oder der Audiofingerabdruck (vgl. Bezugszeichen 110b') in den Speicher gespeichert, was anhand des Schrittes 130 illustriert ist.

Entsprechend weiteren Ausführungsbeispielen kann zusätzlich zu den reinen Parametern bzw. dem Fingerabdruck oder dem Teil der Audioaufnahme auch eine Zeit- und/oder Ortsinformation hinzugefügt werden. Diese wird ebenfalls in dem Schritt 130 zusammen gespeichert und rührt von einem weiteren Schritt 132 her, der entsprechend das Bestimmen des aktuellen Ortes und/oder das Bestimmen der aktuellen Zeit umfasst.

Wenn die Datenbank aufgebaut ist und einem entsprechenden Umfang hat (vgl. Schritt 130) kann diese ausgewertet werden, z. B. durch Korrelation bzw. statistische Auswertung, wie anhand des Schrittes 132 illustriert ist.

Ein typischer Anwendungsfall für die oben beschriebenen Verfahren 100 und 100' ist, dass ein Gerät beispielsweise in einem Hotelzimmer liegt und die aktuellen Umgebungsgeräusche monitored. Wenn der Hotelgast nur in seinem Hotelzimmer zur Ruhe kommen möchte, davon aber durch Störgeräusche gehindert wird, kann er diese Störgeräusche markieren. Das Ergebnis, was dadurch erzielbar ist, ist, dass das Zimmer vielleicht gar nicht zu laut ist, es jedoch einzelne Geräusche, wie z. B. eine Klimaanlage gibt, die beim Einschlafen hindern. Mit Hilfe des Geräts kann er eine subjektive Bewertung, d. h. also auch eine Einstufung in Signalklassen, wie z. B. in "störend", "stark störend" oder "sehr stark störend", abgeben. Die Bewertung charakterisiert die durch ihn bewertete Geräuschkulisse anhand verschiedener Parameter. Im Resultat werden dann in der Datenbank die Audiofingerabdrücke, psychoakustische Parameter bzw. allgemein die Aufnahme zugeordnet zu einer der Signalklassen gespeichert.

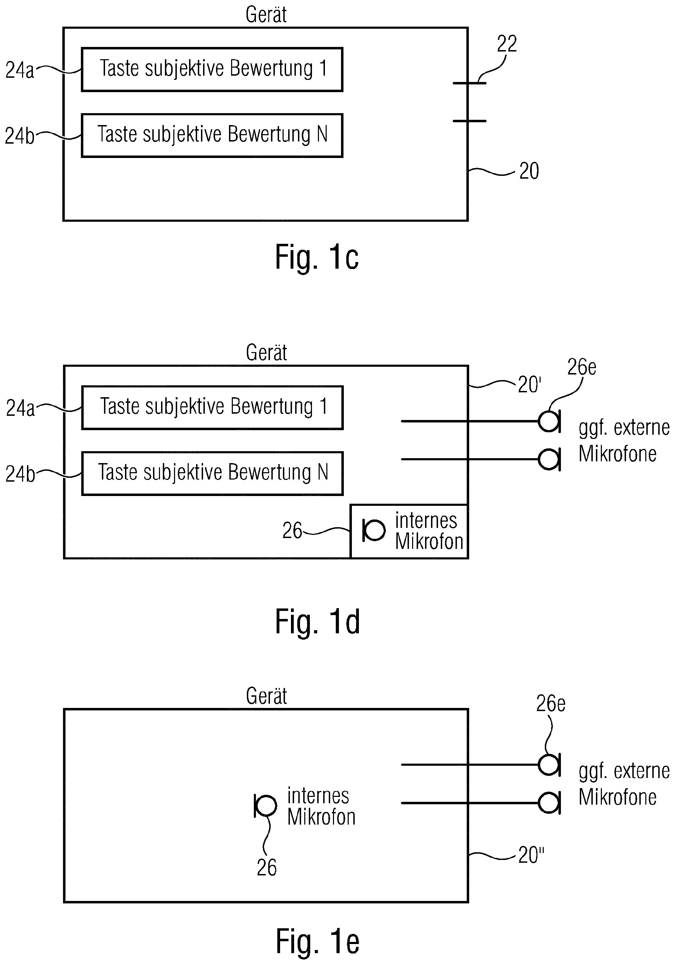

Nachfolgend werden Bezug nehmend auf Fig. 1c, 1d und 1e drei Gerätevarianten erläutert.

Fig. 1c zeigt eine erste Gerätevariante, nämlich die Vorrichtung 20, die über eine Schnittstelle oder Funkschnittstelle mit der eigentlichen Signalverarbeitungseinheit (nicht dargestellt) verbunden ist und im Wesentlichen dazu ausgebildet ist, das Signal zur Identifizierung eines Störsignals bzw. einer bestimmten Signalklasse auszusenden. Hierzu umfasst die Vorrichtung 22 in diesem Ausführungsbeispiel zwei Taster 24a und 24b, für welche eine subjektive Bewertung abgegeben werden kann. Diese Taster 24a und 24b sind unterschiedlichen Signalklassen zugeordnet.

Bei dieser Vorrichtung 20 kann es sich beispielsweise auch um ein Smartdevice, wie z. B. ein Tablet, eine Smartwatch, ein Smartphone handeln, die die virtuellen Taster 24a und 24b, integriert in eine App, umfassen. In diese App kann beispielsweise auch ein Fragebogen miteingeschlossen sein, mittels welchem weitere Informationen allgemeinerer Natur von dem Nutzer, z. B. dem Hotelgast gesammelt werden können.

Bei Betätigen der Taster 24a oder 24b wird dann in der eigentlichen Datensammelvorrichtung das Verfahren der Zwischenspeicherung von Umgebungsgeräuschen bzw. eines Ableitens von Parametern und des eigentlichen Speicherns durchgeführt. Diese externe Vorrichtung kann beispielsweise ein Server mit einem Mikrofon am jeweiligen Überwachungsort sein.

Fig. 1d zeigt eine weitere Variante, bei welcher in die Vorrichtung 20', die die Taster 24a und 24b umfasst, ein internes Mikrofon 26 zum Empfangen der Umgebungsgeräusche integriert ist. Additiv bzw. alternativ kann ein externes Mikrofon 26e über eine Schnittstelle mit der Vorrichtung 20' verbunden sein.

Fig. 1e zeigt eine weitere Variante der Vorrichtung 20", die keine Taste mehr als Eingabemittel umfasst, sondern nur das interne Mikrofon 26 bzw. das optionale bzw. alternative externe Mikrofon 26e aufweist und über diese Sprachkommando, welches einem Umgebungsgeräusch einer Signalklasse zugeordnet werden kann.

An dieser Stelle sei Bezug nehmend auf die Vorrichtungen 20' und 20" angemerkt, dass auch mehrere externe Mikrofone anschließbar wären. Hierbei wäre es auch denkbar, dass zusätzlich zu dem normalen Luftschall auch ein Körperschall aufgezeichnet wird (d. h. also, dass die jeweilige Vorrichtung einen Körperschallempfänger hat).

Bezug nehmend auf das Ausführungsbeispiel aus Fig. 1c und 1d sei angemerkt, dass die unterschiedlichen Taster 24a und 24b auch durch weitere Taster erweitert sein können. Zur Differenzierung der Taster können auch Farbcodierungen vorgesehen sein: rot = störend, gelb = indifferent, grün = sehr angenehmes Umgebungsgeräusch (letzteres z. B. wenn Vogelgesang zwar deutlich hörbar, aber eben als erwünschtes Geräusch empfunden wird).

Bezug nehmend auf Fig. 1c bis 1d sei angemerkt, dass die Geräte 20, 20' und 20" zudem als Software-Anwendungen auch weiterhin in Geräten, wie z. B. Smartphones, Tablets oder Smartwatches integriert sein können. Diese Softwareanwendungen können folgend Funktionen ermöglichen:
- Erweiterung der oben erwähnten Erfassung von Geräuschqualität um Fragebogentechniken oder andere subjektive Erhebungstechniken;
- Nutzung der an den weiteren Geräten vorhandenen Sensorik (Mikrofone, GPS, Neigungssensoren, Biofeedbackfunktionen);
- Drahtlose und ggf. mechanische Verbindung mit dem von uns entwickelten Gerät zur Datenkommunikation;
- Komplette Steuerung des von uns entwickelten Gerätes über eine von uns entwickelte Software.

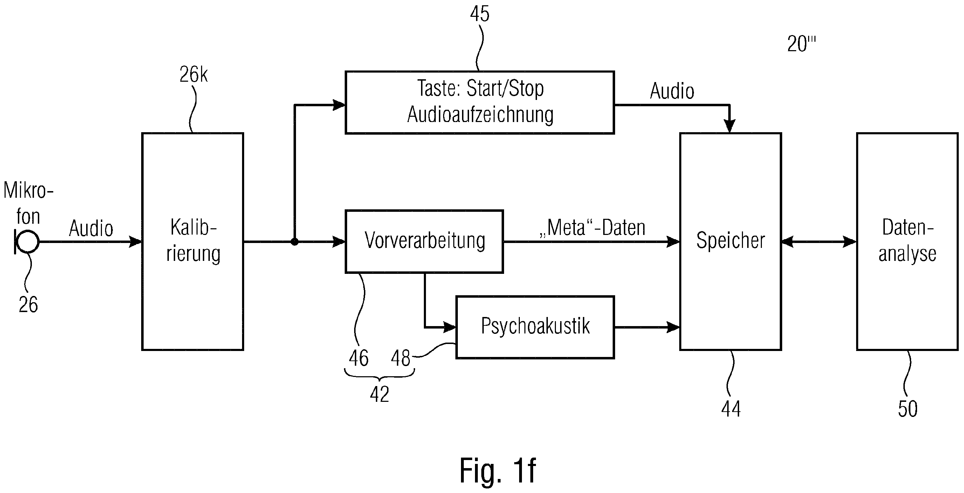

Fig. 1f zeigt die Komponenten einer Vorrichtung 20"'. Die Vorrichtung 20'" umfasst ein Mikrofon 26, optionale Kalibriermittel 26k zum kalibrieren des Mikrofons sowie eine Verarbeitungseinheit 42 und einen Speicher 44.

Die Verarbeitungsmittel 42 umfassen eine Vorverarbeitung 46 zum Codieren der Audiodatei bzw. zum Ableiten eines Audiofingerabdrucks und eine Einheit zum Ermitteln psychoakustischer Parameter 48. Sowohl die Metadaten der Vorverarbeitung 46 als auch die psychoakustischen Parameter der Einheit 48 werden in den Speicher 44 geschrieben. Zusätzlich kann auch das Audiosignal, z. B. gesteuert über eine Taste mittels der Einheit 49 in den Speicher 44 gespeichert oder exakter gespeichert werden.

Die Kalibriermittel 26k dienen dazu, um alle Sensoren mit einem definierten Empfindlichkeitswert zu versehen. Hierzu erfolgt im Vorfeld eine Messung bzw. Aufzeichnung, z. B. der Schaltung, des Frequenzgangs oder einer Kompression.

Ausgehend von dem gespeicherten Audiosampel, Metadaten (Audiofingerabdruck von dem psychoakustischen Parameter) sowie der Markierung mittels einer der Eingabemittel aus den Figuren 1c bis 1d kann dann die eigentliche Datenanalyse mittels des Datenanalysators 50 und Zuordnung in die einzelnen Signalklassen erfolgen.

An dieser Stelle sei angemerkt, dass die Vorrichtung im Regelfall eine mobile Vorrichtung ist, so dass sie typischerweise über Batterie oder einen Akku mittels Strom versorgt werden kann. Alternativ wäre auch eine herkömmliche Stromversorgung denkbar. Um die Aufnahmen zu speichern, kann die Vorrichtung auch ein Speichermedium, wie z. B. ein portables Speichermedium (z. B. SD-Karte) oder eine Serveranbindung umfassen. Diese Serveranbindung erfolgt über eine drahtgebundene bzw. Glasfaserschnittstelle oder sogar eine Funkschnittstelle. Auf Protokollebene gibt es unterschiedliche Möglichkeiten hierzu, auf die nicht weiter eingegangen wird.

Zur besseren Auswertbarkeit kann die Vorrichtung auch Mittel zur exakten Synchronisation mit anderen Geräten, wie z. B. einen Timecode oder einen Worldclock umfassen. Des Weiteren wäre es auch denkbar, dass die Vorrichtung mit einer Positionsbestimmungseinrichtung, wie z. B. einen GPS-Empfänger gekoppelt ist oder diesen integriert hat, um festzustellen, welche Störgeräusche an welchem Ort ermittelt oder als störend empfunden wurden.

An dieser Stelle sei auch angemerkt, dass entsprechend weiteren Ausführungsbeispielen beim Verfahren 100 bzw. 100' auch eine Vorabkalibrierung (vgl. Kalibriermittel 26k) erfolgen kann. Das heißt also, dass entsprechend Ausführungsbeispielen das oben erläuterte Verfahren 100 bzw. 100' einen Schritt des Kalibrierens umfasst.

Zu Aspekte 1 sei angemerkt, dass es entsprechend Ausführungsbeispielen auch denkbar wäre, dass alle diese Vorrichtungen zur Datenreduktion eine jeweils datenreduzierte Aufzeichnung der Messdaten durchführt. Die Datenreduktion kann auch vorteilhaft im Hinblick auf Langzeitmessungen sein. Je nach Komprimierungsgrad bzw. Fehlerbehaftung kann auch so sichergestellt werden, dass die Privatsphäre gewahrt bleibt, da die immer mitgehörten Daten derart komprimiert sein können, dass im Wesentlichen nur eine Aufzeichnung von Parametern, wie z. B. psychoakustischen Parametern (Rauigkeit, Schärfe, Tonalität, etc.) oder eines Audiofingerabdrucks erfolgt. An dieser Stelle sei nochmals angemerkt, dass die genaue Wahl, ob Aufzeichnung oder Audiofingerabdruck oder auch nur psychoakustische Parameter im Wesentlichen von gesetzlichen Randbedingungen zum Daten- und Verbraucherschutz beeinflusst wird.

Wie oben bereits erläutert, kommen sogenannte "Audiofingerabdrücke" zum Einsatz, wobei es auch hier unterschiedliche Varianten gibt, auf die nachfolgend näher eingegangen werden wird. Es sind bereits eine Reihe von Verfahren bekannt, mit deren Hilfe Merkmale bzw. Fingerabdrücke aus einem Audiosignal extrahiert werden können. Das US-Patent Nr. 5,918,223 offenbart ein Verfahren für die inhaltsbasierte Analyse, Speicherung, Wiedergewinnung und Segmentierung von Audioinformationen. Eine Analyse von Audiodaten erzeugt einen Satz von numerischen Werten, der auch als Merkmalsvektor bezeichnet wird, und der dazu verwendet werden kann, um die Ähnlichkeit zwischen einzelnen Audiostücken zu klassifizieren und rangmäßig zu ordnen. Als Merkmale zur Charakterisierung bzw. Klassifizierung von Audiostücken hinsichtlich ihres Inhalts wird die Lautheit eines Stücks, die Tonhöhe, die Tonhelligkeit, die Bandbreite und die sogenannten Mel-Frequenz-Cepstral-Koeffizienten (MFCCs) eines Audiostücks verwendet. Die Werte pro Block oder Frame werden gespeichert und einer ersten Ableitung nach der Zeit unterzogen. Hieraus werden statistische Größen berechnet, wie z.B. der Mittelwert oder die Standardabweichung, und zwar von jedem dieser Merkmale einschließlich der ersten Ableitungen derselben, um eine Variation über der Zeit zu beschreiben. Dieser Satz von statistischen Größen bildet den Merkmals-Vektor. Der Merkmals-Vektor ist somit ein Fingerabdruck des Audiostücks und kann in einer Datenbank gespeichert werden.

Die Fachveröffentlichung "Multimedia Content Analysis", Yao Wang u.a., IEEE Signal Processing Magazine, November 2000, Seiten 12 bis 36, offenbart ein ähnliches Konzept, um Multimediastücke zu indizieren und charakterisieren. Um eine effiziente Zuordnung eines Audiosignals zu einer bestimmten Klasse zu gewährleisten, wurden eine Reihe von Merkmalen und Klassifikatoren entwickelt. Als Merkmal zum Klassifizieren des Inhalts eines Multimediastücks werden Zeitbereichsmerkmale oder Frequenzbereichsmerkmale vorgeschlagen. Diese umfassen die Lautstärke, die Tonhöhe als Grundfrequenz einer Audiosignalform, spektrale Merkmale, wie z.B. den Energieinhalt eines Bandes bezogen auf den Gesamtenergieinhalt, Grenzfrequenzen im Spektralverlauf und andere. Neben Kurzzeitmerkmalen, die die sogenannten Größen pro Block von Abtastwerten des Audiosignals betreffen, werden auch Langzeitgrößen vorgeschlagen, die sich auf einen längeren Zeitraum des Audiostücks beziehen. Weitere typische Merkmale werden durch die zeitliche Differenzbildung der jeweiligen Merkmale gebildet. Die blockweise gewonnenen Merkmale werden selten direkt als solche zur Klassifikation weitergegeben, da sie noch eine viel zu hohe Datenrate aufweisen. Eine gängige Form der weiteren Verarbeitung besteht in der Berechnung von Kurzzeitstatistiken. Dazu gehören z.B. die Bildung von Mittelwert, Varianz und zeitlichen Korrelationskoeffizienten. Dies reduziert die Datenrate und resultiert andererseits in einer besseren Wiedererkennung eines Audiosignals.

In der WO 02/065782 wird ein Verfahren zum Bilden eines Fingerabdrucks zu einem Multimediasignal beschrieben. Das Verfahren beruht auf der Extraktion von einem oder mehreren Merkmalen aus einem Audiosignal. Das Audiosignal wird hierzu in Segmente aufgeteilt und in jedem Segment erfolgt eine Verarbeitung nach Blöcken und Frequenzbändern. Als Beispiele werden die bandweise Berechnung der Energie, Tonalität und Standardabweichung des Leistungsdichtespektrums genannt.

Weiterhin ist aus DE 101 34 471 und DE 101 09 648 eine Vorrichtung und ein Verfahren zum Klassifizieren eines Audiosignals bekannt, bei denen der Fingerabdruck aufgrund eines Maßes für die Tonalität des Audiosignals gewonnen wird. Der Fingerabdruck ermöglicht dabei eine robuste, inhaltsbasierte Klassifizierung von Audiosignalen. Die genannten Schriften zeigen dabei mehrere Möglichkeiten auf, um ein Tonalitätsmaß über ein Audiosignal zu erzeugen. In jedem Fall liegt der Berechnung der Tonalität eine Umsetzung eines Segments des Audiosignals in den Spektralbereich zugrunde. Die Tonalität kann dann für ein Frequenzband oder für alle Frequenzbänder parallel berechnet werden. Der Nachteil eines solchen Verfahrens ist, dass der Fingerabdruck bei zunehmender Verzerrung der Audiosignale nicht mehr aussagekräftig genug ist, und dass eine Erkennung des Audiosignals dann nicht mehr mit zufriedenstellender Zuverlässigkeit möglich ist. Verzerrungen jedoch treten in sehr vielen Fällen auf, insbesondere wenn Audiosignale über ein System mit geringer Übertragungsqualität übertragen werden. Dies ist gegenwärtig insbesondere bei mobilen Systemen bzw. im Falle starker Datenkompression der Fall. Solche Systeme, wie z.B. Mobiltelefone, sind primär zur bidirektionalen Übertragung von Sprachsignalen ausgelegt und übertragen Musiksignale häufig nur mit einer sehr geringen Qualität. Dazu kommen weitere Faktoren, die einen negativen Einfluß auf die Qualität eines übertragenen Signals haben können, z.B. Mikrofone geringer Qualität, Kanalstörungen und Transcodierungseffekte. Die Folge einer Verschlechterung der Signalqualität ist in Bezug auf eine Vorrichtung zur Identifizierung und Klassifizierung eines Signals eine stark verschlechterte Erkennungsleistung. Untersuchungen haben ergeben, dass insbesondere bei Verwendung einer Vorrichtung bzw. eines Verfahrens gemäß DE 101 34 471 und DE 101 09 648 Änderungen an dem System unter Beibehaltung des Erkennungskriteriums Tonalität (Spectral Flatness Measure) keine weiteren signifikanten Verbesserungen der Erkennungsleistung möglich sind.

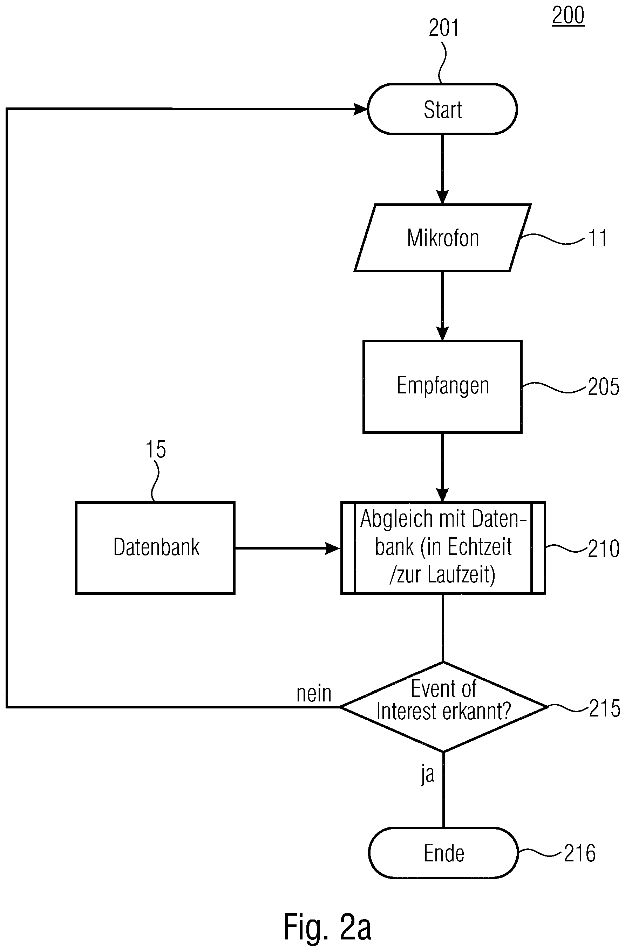

Wenn man nun davon ausgeht, dass eine ausreichende Datenbasis, umfassend Geräusche, wie z. B. Störgeräusche unterschiedlicher Signalklassen aufgebaut ist, kann nun ausgehend hiervon in einer beliebigen Umgebung nach diesem Störgeräusch gesucht werden und protokolliert werden, ob ein derartiges Störgeräusch erkannt ist. Dieses Verfahren ist in Fig. 2a illustriert.

Fig. 2a zeigt das Verfahren 200 mit dem Schritt 210 des Abgleichens von Umgebungsgeräuschen, welche über das Mikrofon 11 empfangen sind (vgl. Schritt Empfangen 205) mit den Aufnahmen aus der Datenbank 15. Sobald ein Match gefunden ist, was anhand der Entscheidungsstelle 215 illustriert ist, erfolgt eine Ausgabe eines Signals, z. B. zum Protokollieren oder zum Ausschließen einer weiteren Aktion. Solange kein Match gefunden ist, wird das Verfahren wiederholt, was anhand des Tages, welcher zum Startpunkt 201 verläuft, illustriert ist.

Entsprechend Ausführungsbeispielen können anstelle der Aufnahme auch die jeweiligen Audiofingerabdrücke der aktuellen Umgebungsgeräusche mit vorab in der Datenbank 15 gespeicherten Audiofingerabdrücken verglichen werden. Hierbei umfasst dann das Verfahren das Ermitteln des Audiofingerabdrucks des aktuellen Umgebungsgeräusches und des Vergleichens mit den in der Datenbank 15 gespeicherten Audiofingerabdrücken.

Auch wenn bei dem Verfahren 200 davon ausgegangen wurde, dass zum Erkennen ein Abgleich von Umgebungsgeräuschen bzw. Audiofingerabdrücken mit im Vorfeld in der Datenbank 15 gespeicherten Umgebungsgeräuschen / Audiofingerabdrücken erfolgt, kann ganz allgemein ausgedrückt das Umgebungsgeräusch hinsichtlich einer Regel überwacht werden. Im Falle des Vergleichens von Umgebungsgeräusch / Audiofingerabdruck würde die Regel dann "partielle Übereinstimmung" bedeuten.

Eine weitere derartige Regel kann beispielsweise ein einfaches Überschreiten von Lautheitswerten sein oder auch das Überschreiten von Schwellwerten bezüglich psychoakustischer Parameter. Hierzu erfolgt dann entsprechend Ausführungsbeispielen ein Ableiten von psychoakustischen Parametern der aktuellen Umgebungsgeräusche, die durch die Mittel der vordefinierten Regel mit vordefinierten zugehörigen Schwellwerten verglichen werden, um so ein Vorliegen eines Events zu erkennen.

Das Verfahren kann entsprechend einem erweiterten Ausführungsbeispiel nicht nur ein reines Erkennen derartiger Störgeräusche, sondern auch ein Klassifizieren der Geräusche, z. B. in Sprache, Motorgeräusch, Musik, Kirchenglocken oder Schüsse durchführen.

Ein mögliches Anwendungsszenario für ein derartiges Verfahren, welches beispielsweise auf ein Smartphone oder auf einer speziell dafür ausgebildeten Vorrichtung verläuft, ist, dass diese Vorrichtung in einem Hotelzimmer liegt und die Umgebungsgeräusche monitort. Hierbei werden die Umgebungsgeräusche anhand der Daten aus der Datenbank 15 ausgewertet und protokolliert, wie viele bzw. welche der wahrscheinlich als Störung empfundenen Geräuschereignisse im Zeitverlauf stattgefunden haben. Dies kann z. B. das Zählen von störenden Klimaanlagengeräuschen im Tagesverlauf sein. Alternativ zum Protokollieren kann auch eine Audioaufzeichnung dieses Geräusch bzw. ein Speichern der im Vorfeld zwischengespeicherten Umgebungsgeräusche (siehe oben) erfolgen. Die dahinter stehende Idee ist, dass der Hotelbetreiber mittels dieses Verfahrens die Geräuschwahrnehmung prognostizieren und evaluieren kann.

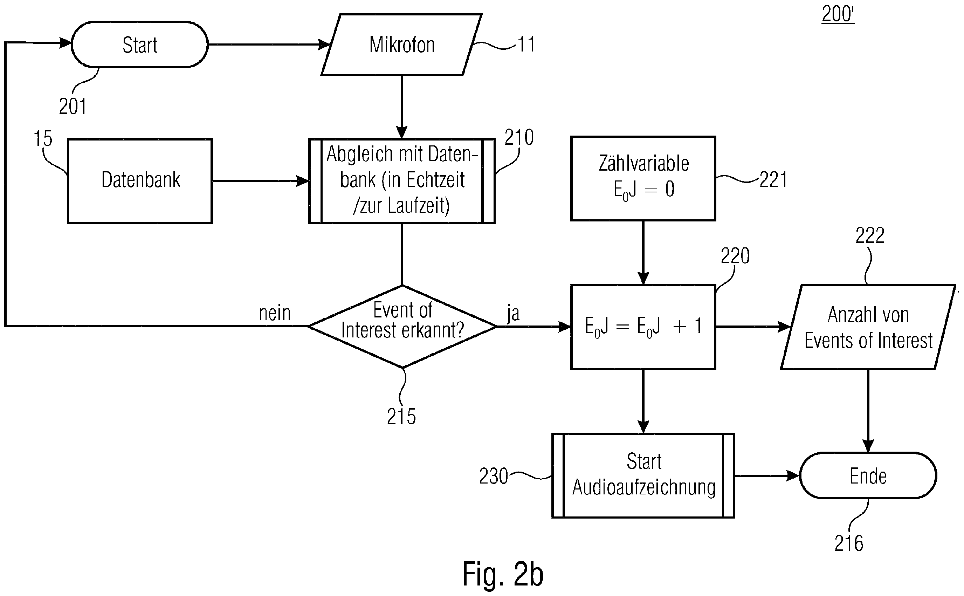

Fig. 2b zeigt ein erweitertes Verfahren 200', das zwischen dem Schritt bzw. Entscheidungspunkt 215 und dem Ende 216 noch weitere Schritte umfasst.

Diese sind Zählen der Events mittels des Schritts 220 oder unter Zuhilfenahme einer Zellvariablen 221, so dass als Ergebnis die Anzahl der Events 222 erhalten wird. Optional kann durch den erkannten Event auch eine Audioaufzeichnung gestartet werden, wie anhand des Schritts 230 illustriert ist.

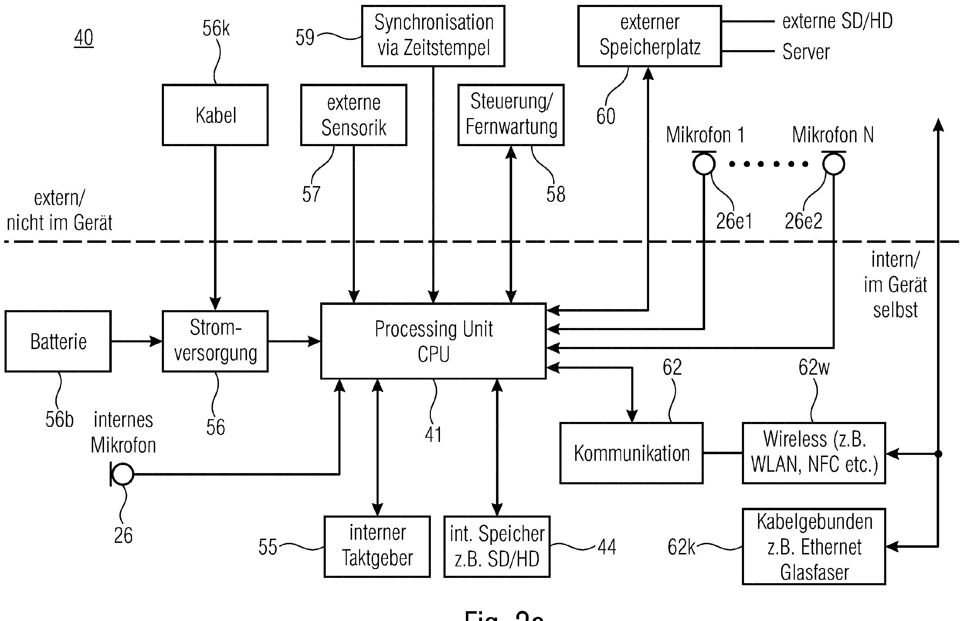

Fig. 2c zeigt eine weitere Implementierung der Vorrichtung 40. Diese hat als zentrale Einheit einen Prozessor 41, der den eigentlichen Schritt des Analysierens / Abgleichens durchführt. Hierzu greift dieser in erster Linie auf das interne Mikrofon 26 zu, wobei auch ein Zugriff auf die externen Mikrofone 26e1 und 26e2 denkbar wäre. Die Daten zum Abgleichen sind z.B. im internen Speicher 44 gespeichert.

Der Prozessor ist optional dazu ausgebildet, Audiofingerabdrücke und/oder psychoakustische Parameter zu ermitteln und diese abzugleichen, um ein entsprechendes Regelmatch zu erhalten.

Um diese Funktionalität zu ermöglichen, sind optionaler Weise weitere Peripherie-Einheiten, wie z. B. der interne Taktgeber 55, die Batterie 56b bzw. allgemeine Stromversorgung 56, welche auch mit dem Kabel 56k realisiert sein kann, vorgesehen. Optional greift der Prozessor auch auf eine weitere Sensorik 57, Steuereinheiten 58, wie z. B. der Aufnahmeaktivierungsknopf oder auch auf einen Zeitgeber 59 zu. Hierbei kann entsprechende weiteren der Prozessor 41 auch ausgebildet sein, eine objektive Geräuschbewertung durchzuführen, um zusammen mit der subjektiven Bewertung (dem Erkennen von subjektiven tonalen Ereignissen) eine Korrelation zu ermitteln.

Entsprechend Ausführungsbeispielen kann der CPU ausgehend von der vorab erhaltenen subjektiven Bewertung der Annehmlichkeit die einzelnen erkannten Geräusche der Signalklassen in unterschiedliche Bewertungsmatrizen in Abhängigkeit der jeweiligen Geräuschklasse einsortieren.

Entsprechend weiteren Ausführungsbeispielen kann zur Speicherung bzw. zum Laden der Datenbank auch ein externer Datenspeicher 60, wie z. B. eine externe Hard Disk oder ein Server vorgesehen sein. Diese Verbindung kann kabelgebunden oder auch drahtlos erfolgen. Bei einer Drahtloskommunikation wäre dann entsprechend weiteren Ausführungsbeispielen eine Kommunikationsschnittstelle 62, wie z. B. eine Wireless-Schnittstelle 62w oder eine Kabelschnittstelle 62k vorzusehen, die dann den Zugriff noch extern realisiert.

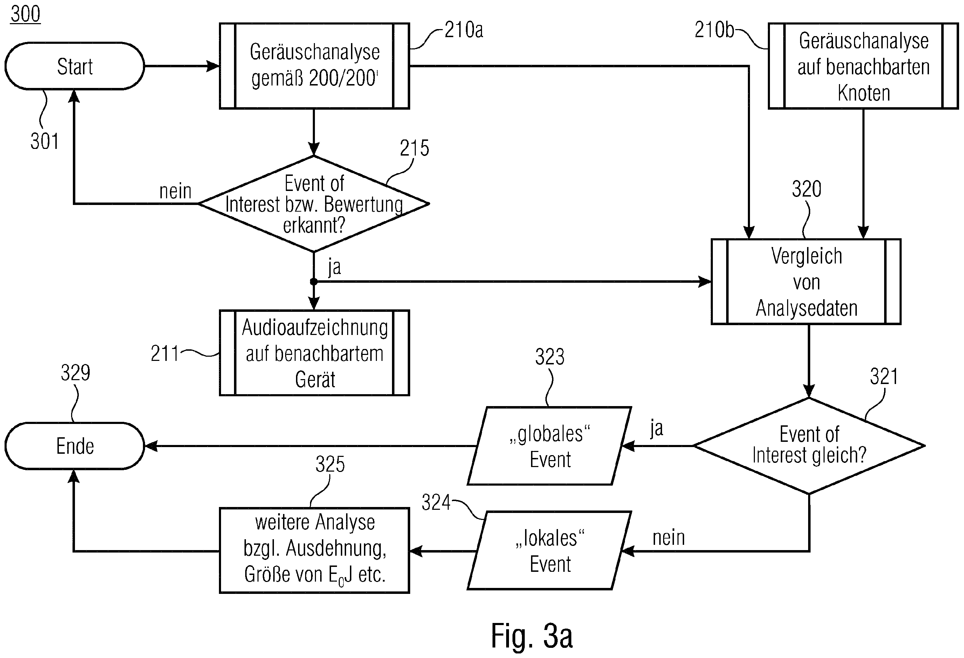

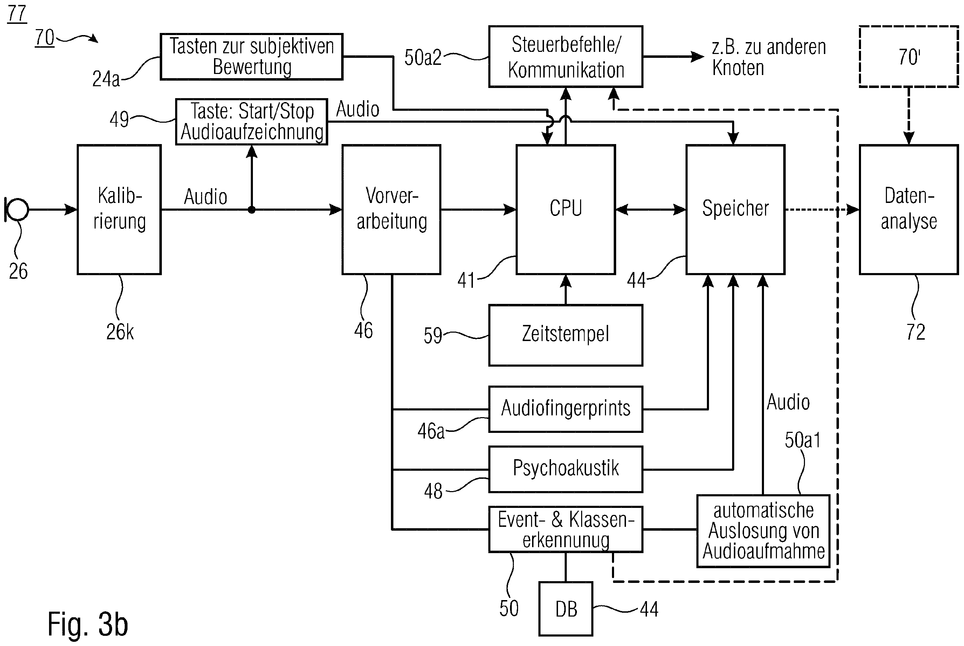

Entsprechend einem weiteren Aspekt wird ein System geschaffen, welches im Wesentlichen aus zwei der eben beschriebenen Vorrichtungen 40 besteht, die miteinander derart kombiniert sind, dass sie sich gegenseitig aktivieren, sobald in einer der Vorrichtungen ein entsprechendes Geräusch, also Signalklasse empfangen ist. Dieses System dient zur Analyse bzw. genaueren Auswertung von Geräuschen der jeweiligen Geräuschklassen. Hierbei wird das nachfolgende in Fig. 3 erläuterte Verfahren durchgeführt.

Fig. 3a zeigt ein Verfahren 300 mit dem Schritt der Geräuschanalyse entsprechend dem Verfahren 200 bzw. 200', der an einer ersten Position und an einer zweiten Position durchgeführt wird. Insofern ist der Schritt 210 zweimal vorhanden (vgl. 210a und 210b).

Die Aufnahme bzw. die ermittelten Parameter, wie z. B. die Audiofingerabdrücke an den zwei Positionen (resultierend aus den Schritten 210a und 210b) werden nun in einem weiteren Schritt 220 verglichen.

Die zwei Schritte 210 an den zwei benachbarten Positionen können entsprechend Ausführungsbeispielen voneinander abhängig sein, wie anhand des optionalen Schrittes "Audioaufzeichnung auf benachbartem Gerät 211" illustriert ist. Alternativ hierzu könnte auch eine andere Aktion am benachbarten Gerät ausgeführt werden. Der Grund hierfür ist, dass, wenn beispielsweise das erste Gerät, welches das Verfahren 210a ausführt, ein Geräusch erkennt und das zweite Gerät, das das Verfahren 210b ausführt, aktiviert, so dass dieses dasselbe Geräusch an einer anderen Position erkennen kann. An dieser Stelle sei noch abschließend festgestellt, dass ausgehend von dem Entscheidungspunkt 215 ein weiterer Pfeil zu dem Startpunkt 301 verläuft, der im Wesentlichen darauf hindeutet, dass das Verfahren einer Geräuschanalyse 210a solange durchgeführt wird, bis ein entsprechendes Match gefunden ist.

Da die Positionen typischerweise räumlich benachbart sind, ist es möglich, so eine Ausbreitung des Geräusches, eine Geschwindigkeit oder eine größere Geräuschquelle abzuschätzen.

Beispielsweise kann beim Vergleichen der eigenen Analyse mit einer zeitgleichen Analyse auf einem anderen Gerät ermittelt werden, wenn ein und dasselbe Event an mehreren Geräten erkannt ist, ob es sich um ein globales Event (vgl. Bezugszeichen 323 nach dem Entscheidungsfeld 321), wie z. B. ein Gewitter handelt oder um ein lokales Event (vgl. Bezugszeichen 324 nach dem Entscheidungsfeld 321). Beim globalen Event 323 ist im Regelfall der Pegelunterschied zwischen "nahem" und "fernen" Gerät vernachlässigbar klein (Pegel ∼1/r, Änderung von r klein im Verhältnis zu r). Bei lokalen Events 324 ist der Pegelunterschied sehr groß (Pegel ∼1/r, Änderung von r groß im Verhältnis zu r). Ein lokaler Event kann beispielsweise ein Hilferuf, eine Sprengstoffexplosion, ein Open-Air Konzert sein. Bei einem lokalen Event können sich noch weitere Analysen, nämlich die Analyse 325 hinsichtlich weiterer Parameter anschließen. Ausgehend von dem zeitlichen Versatz oder auch ausgehend von Frequenzverschiebungen kann eine Größe des lokalen Events, eine Ausbreitung oder ein zeitlicher Verlauf bestimmt werden. Das Feststellen des globalen Events 323 bzw. des lokalen Events 324 wie z. B. die Analyse 325 desselben stellt im Wesentlichen das Ende 329 des Verfahrens dar.

Ein mögliches Anmeldungsszenario ist, dass mehrere Geräte beispielsweise über eine Innenstadt verteilt sind. Alle Geräte sind über eine Datenverbindung miteinander verbunden (z. B. drahtgebundene, drahtlose, Ethernet oder LAN-Verbindungen. Auch wäre eine Verbindung über einen Server möglich. Alle Geräte analysieren (psychoakustische Parameter, Audiofingerprint) die Geräuschkulisse. Eines dieser Geräte erkennt ein charakteristisches Ereignis, z. B. eine vorab in der Datenbank klassifizierte Signalklasse. Es wird an Ort und Stelle eine Audioaufzeichnung ausgelöst. Gleichzeitig löst das Gerät ein Verhalten, z. B. eine Aktion eines benachbarten Knoten aus. Durch den Vergleich der zwei Knoten kann eben zwischen einem globalen und einem lokalen Event, wie oben erläutert, unterschieden werden.

Das Verfahren 300 wird im Wesentlichen von einem System umfassend zwei der Vorrichtungen 40 (Fig. 2c) ausgeführt.

Da allerdings eine Extra-Schnittstelle zur Verbindung der zwei Vorrichtungen vorgesehen ist, können auch geringfügige Variationen möglich sein, wie anhand von Fig. 3b dargestellt ist.

Fig. 3b zeigt eine Vorrichtung 70 mit eingangsseitig einem Mikrofon 26 und einer optionalen Kalibriereinheit 26k. Hierbei wird der von dem Mikrofon empfangene Audiostrom mittels der Vorverarbeitung 46 vorprozessiert, um z.B. beispielsweise Audiofingerprints (vgl. Bezugszeichen 46a) oder psychoakustische Parameter (vgl. Bezugszeichen 48) abzuleiten. Parallel hierzu kann das Erkennen von Events bzw. Klassen erfolgen (vgl. Bezugszeichen 50). Durch dieses Erkennen von Events/Klassen kann einerseits eine automatische Audioaufnahme ausgelöst werden (vgl. Bezugszeichen 50a1) oder ein Steuerbefehl z. B. zum Aktivieren des weiteren Knotens (vgl. Bezugszeichen 50a2 bzw. weiterer Vorrichtung 70') ausgesendet werden. Die Mittel zur Ausgabe des Steuerbefehls 50a2 können beispielsweise den Speicher aktivieren, der dann von den Mitteln zum Erzeugen des Audiofingerprints 46a bzw. den Mitteln zum Ableiten der psychoakustischen Parameter 48 die Daten empfängt, und aufzeichnet. Auch kann das Audiosignal in dem Speicher 44 gespeichert werden, wobei hier ebenfalls wie oben durch eine Taste 49a die Aufzeichnung ermöglicht oder verhindert werden kann. In diesem Ausführungsbeispiel kann die CPU 41 ebenfalls mit einem Zeitgeber 59 verbunden sein.

Neben der Vorrichtung 70 ist an einem weiteren, benachbarten Ort sie Vorrichtung 70' vorgesehen, die im Wesentlichen dieselben Funktionen erfüllt. Diese Vorrichtung 70' weise ebenfalls einen Speicher 44 auf, der, wenn die Vorrichtung 70' mittels den Aktivierungsmittel 50a2 oder ausgehend von einem zu einer Klasse zugehörigen, erkannten Geräusch, die Audioereignisse für diesen Zeitraum gespeichert hat. Die Aufnahme bzw. die Audiofingerprints bzw. die psychoakustischen Parameter aus den Speichern 44 der Vorrichtungen 70 und 70' werden im nächsten Schritt durch den Datenanalysators 72 beispielsweise hinsichtlich der Ausdehnung analysiert. Hierzu ist es allerdings vorteilhaft, wenn auch der Datenanalysator 72 mit beiden Speicher der weiteren Vorrichtung verbunden ist, wobei angemerkt sei, dass der Datenanalysator 72 in einer der Vorrichtungen 70 und 70' oder extern zu beiden angeordnet sein kann.

Entsprechend den weiteren Ausführungsbeispielen kann in die Vorrichtung 70 auch ein Taster, wie z. B. ein Taster 24a' integriert sein, so dass die Vorrichtung 70 auch die Funktionalität der Vorrichtungen 20, 20' oder 20" übernimmt.

Das optionale Element 50a' ermöglicht das automatisierte Auslösen einer Aufnahme nach Erkennen einer Klassifikation. Alternativ hierzu wäre es auch denkbar, dass die automatischen Aufnahmen gestaltet werden, wenn ein Geräusch in keinem der bereits erhaltenen Signalklassen gefunden werden konnte.

In anderen Worten kann durch das Verfahren 303 beschrieben werden, dass im Wesentlichen die Funktionalität des Verfahrens 200 abgedeckt wird, also die Erkennung und Klassifizierung von Geräuschen, z. B. Sprache, Motorgeräuschen, Musik, Küchenblöcken, Schüssen und diese Funktionalität aber um die Analyse ausgehend von einer Vielzahl von Mikrofonen an unterschiedlichen Orten erweitert ist.

An dieser Stelle sei auch angemerkt, dass beispielsweise eine automatische Aufnahme der ganz bestimmten Klassen, wie z. B. bei Explosionen und Schüssen, die auf Terrorismus hindeuten, möglich wäre. Hierbei wäre es sinnvoll, wenn alle benachbarten Knoten 70 / 70' dabei direkt auf die Aufnahme geschaltet werden.

Des Weiteren wäre auch eine automatische (z. B. zeitlich beschränkte) Aufnahme möglich, wenn bestimmte Lärmgrenzwerte über einem Zeitraum überschritten werden. Diese Aufnahme kann auch auf benachbarte Knoten erweitert werden, um so durch diese längeren Aufnahmen in dem Zusammenführen mehrerer Knoten eine genaue Ortung der Signalquellen durchzuführen (Störquellenursachenforschung, Trennung von Geräuschquellen).

Mögliche Anwendungsgebiete der oben erläuterten drei Szenarien sind:
- Tourismusbranche, Hotels, Wellnessbereich, Fahrradwege Wanderwege;
- Arbeitsschutz (Büroarbeit, Maschinenhalle, Kabinenarbeitsplätze);
- Städteplanung (Soundscapes, Lärmkartierung);
- Öffentliche Sicherheit (Überwachung von Produktionsanlagen).

Kombinationen der Verfahren 100/100', 200/200' und 300 bzw. der Funktionalität der Vorrichtungen 20/20'/20"/20"', 40 und 70/70' wären auch denkbar. Beispiele hierfür sind Kombination aus Vorrichtung und Verfahren zur subjektiver Bewertung und Aufnahme in und zur maschinellen Bewertung einem Gerät.

An dieser Stelle sei angemerkt, dass Elemente, welche im Zusammenhang mit einem anderen Aspekt erläutert wurde, selbstverständlich auch auf einen zweiten Aspekt übertragbar sind. So ist beispielsweise die Lehre bzgl. der Audiofingerabdrücke oder der Psychoakustischen Parameter auf alle drei Aspekte anwendbar, wobei die Lehre nur im Zusammenhang mit dem ersteren Aspekt im Detail erläutert ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden.

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100, 100') zum Erzeugen einer Datenbank (15), mit folgenden Schritten:
Empfangen (110, 110') von Umgebungsgeräuschen und Zwischenspeichern der Umgebungsgeräusche für ein mitwanderndes Zeitfensters oder Ableiten eines Parametersatzes von den Umgebungsgeräuschen und Zwischenspeichern des Parametersatzes für das mitwandernde Zeitfenster, um eine zwischengespeicherte Aufnahme zu erhalten;
Erhalten (120) eines Signals, das eine Signalklasse aus einer Mehrzahl von Signalklassen in dem Umgebungsgeräusch identifiziert;
Speichern (130), als Reaktion auf das Signal, der zwischengespeicherten Aufnahme in einem Speicher; und
Wiederholen der Schritte des Erhaltens (120) und des Speicherns (130), um die Datenbank (15) zu erhalten, die eine Mehrzahl von zwischengespeicherten Aufnahmen für die gleiche Signalklasse aufweist;
wobei das Signal von Benutzereingabemitteln (24a, 24b), einem Taster (24a, 24b) oder einem Smartdevice empfangen wird.

2. Verfahren (100, 100') gemäß Anspruch 1, wobei eine zeitliche Abhängigkeit zwischen dem Signal und dem mitwandernden Zeitfenster der zwischengespeicherten Aufnahme besteht.

3. Verfahren (100, 100') gemäß Anspruch 2, wobei die zeitliche Abhängigkeit darin besteht, dass der Beginn des mitwanderndes Zeitfensters vor dem Zeitpunkt des Signals liegt; oder
dass das Ende des mitwandernden Zeitfensters auf oder vor den Zeitpunkt des Signals fällt.

4. Verfahren (100, 100') gemäß einem der vorherigen Ansprüche, wobei das Signal von einem Detektor, zur Ermittlung der Lautheit, einem Prozessor zur Identifikation eines Steuersignal in dem Umgebungsgeräusch oder einer Vorrichtung zum Erzeugen einer Datenbank (15) an einer benachbarten Position empfangen wird.

5. Verfahren (100, 100') gemäß einem der vorherigen Ansprüche, wobei das Ableiten eines Parametersatzes das Ermitteln eines Audio-Fingerabdrucks für die zwischengespeicherten Umgebungsgeräusche umfasst; und/oder wobei das Ableiten eines Parametersatzes das Ermitteln von psychoakustischen Parametern der zwischengespeicherten Aufnahme umfasst; oder wobei das Ableiten eines Parametersatzes das Ermitteln von psychoakustischen Parametern der zwischengespeicherten Aufnahme umfasst und wobei die psychoakustischen Parameter eine Lautheit, Schärfe, Tonheit, Rauhigkeit und/oder Schwankungsstärke umfasst.

6. Verfahren (100, 100') gemäß einem der vorherigen Ansprüche, das das Erhalten eines weiteren Signals, das eine weitere Signalklasse einer Mehrzahl von Signalklassen in dem Umgebungsgeräusch identifiziert, umfasst, wobei das Speichern als Reaktion auf das weitere Signal, durchgeführt wird, so dass eine Zuordnung der zwischengespeicherten Aufnahme zu der Klasse oder der weiteren Signalklasse erhalten bleibt.

7. Verfahren (100, 100') gemäß einem der vorherigen Ansprüche, wobei beim Speichern (130) ein Zeitstempel, zu welchem das Signal erhalten ist, zusammen mit der zwischengespeicherten Aufnahme mitgespeichert wird.

8. Verfahren (100, 100') gemäß einem der vorherigen Ansprüche, wobei das Verfahren (100, 100') den Schritt des Ermittelns des aktuellen Orts beim Erhalten des Signals umfasst und der ermittelte Ort zusammen mit der zwischengespeicherten Aufnahme mitgespeichert wird.

9. Verfahren (100, 100') gemäß einem der vorherigen Ansprüche, wobei die zwischengespeicherte Aufnahme in datenreduzierter Weise gespeichert wird; und/oder
wobei der Speicher (44) extern angeordnet ist.

10. Computerprogramm mit einem Programmcode zur Durchführung des Verfahrens (100, 100') nach einem der Ansprüche 1 bis 9, wenn das Programm auf einem Computer abläuft.

11. Vorrichtung (20, 20', 20", 20'") zum Erzeugen einer Datenbank (15), mit folgenden Mitteln:
Mikrofon (11) zum Empfangen von Umgebungsgeräuschen;
Zwischenspeicher zum Zwischenspeichern der Umgebungsgeräusche für ein mitwanderndes Zeitfensters oder Ableiten eines Parametersatzes von den Umgebungsgeräuschen und zum Zwischenspeichern des Parametersatzes für das mitwandernde Zeitfenster, um eine zwischengespeicherte Aufnahme zu erhalten;
Schnittstelle zum Erhalten eines Signals, das eine Signalklasse aus einer Mehrzahl von Signalklassen in dem Umgebungsgeräusch identifiziert; und
Speicher (44) zum Speichern, als Reaktion auf das Signal, der zwischengespeicherten Aufnahme, wobei das Signal von Benutzereingabemitteln (24a, 24b), einem Taster (24a, 24b) oder einem Smartdevice empfangen wird;
wobei die Vorrichtung (20, 20', 20", 20"') ausgebildet ist, das Erhalten und das Speichern zu wiederholen, um die Datenbank (15) zu erhalten, die eine Mehrzahl von zwischengespeicherten Aufnahmen für die gleiche Signalklasse aufweist.

12. Vorrichtung (20, 20', 20", 20'") gemäß Anspruch 11, wobei die Vorrichtung (20, 20', 20", 20'") Eingabemittel, einen Taster oder einen Smartdevice umfasst, die mit der Eingabeschnittstelle verbunden sind; oder
wobei die Eingabeschnittstelle mit einem Detektor zur Ermittlung der Lautheit, einem Prozessor zur Identifikation eines Steuersignals in dem Umgebungsgeräusch oder einer weiteren Vorrichtung (20, 20', 20", 20"') zum Erzeugen einer Datenbank (15) an einer benachbarten Position verbunden ist.

13. Vorrichtung (20, 20', 20", 20"') gemäß Anspruch 11 oder 12, wobei die Vorrichtung (20, 20', 20", 20"') Positionsbestimmungsmittel umfasst, über welche eine aktuelle Position ermittelbar ist, so dass die aktuelle Position zusammen mit dem zu speichernden Teil oder Parameter der zwischengespeicherten Aufnahme gespeichert werden kann.

14. Vorrichtung (20, 20', 20", 20"') gemäß einem der Ansprüche 11 bis 13, wobei der Zwischenspeicher ein Ringspeicher ist; und/oder
die Vorrichtung (20, 20', 20", 20"') eine Kommunikationsschnittstelle aufweist, über welche der extern angeordnete Speicher (44) verbindbar ist.

## Claims

1. A method (100, 100') for generating a database (15), comprising the steps of:
receiving (110, 110') environmental noises and buffering the environmental noises for a migrating time window or deriving a set of parameters from the environmental noises and buffering the set of parameters for the migrating time window in order to obtain a buffered recording;
obtaining (120) a signal which identifies a signal class from a plurality of signal classes in the environmental noise;
storing (130) the buffered recording, responsively to the signal, in a memory; and
repeating the steps of obtaining (120) and storing (130) in order to obtain the database (15) which comprises a plurality of buffered recordings for the same signal class;
wherein the signal is received by user input means (24a, 24b), a button (24a, 24b) or a smart device.

2. The method (100, 100') in accordance with claim 1, wherein there is a temporal dependence between the signal and the migrating time window of the buffered recording.

3. The method (100, 100') in accordance with claim 2, wherein the temporal dependence is that the beginning of the migrating time window is before the time of the signal; or
the end of the migrating time window is at or before the time of the signal.

4. The method (100, 100') in accordance with any of the preceding claims, wherein the signal is received by a detector for determining the volume, a processor for identifying a control signal in the environmental noise, or a device for generating a database (15) at a neighboring position.

5. The method (100, 100') in accordance with any of the preceding claims, wherein deriving a set of parameters includes determining an audio fingerprint for the buffered environmental noises; and/or
wherein deriving a set of parameters includes determining psychoacoustic parameters of the buffered recording; or wherein deriving a set of parameters includes determining psychoacoustic parameters of the buffered recording and wherein the psychoacoustic parameters include volume, sharpness, tonality, roughness and/or an intensity of variation.

6. The method (100, 100') in accordance with any of the preceding claims, including obtaining a further signal which identifies a further signal class of a plurality of signal classes in the environmental noise, wherein storing is performed responsively to the further signal so that an association of the buffered recording to the class or the further signal class is maintained.

7. The method (100, 100') in accordance with any of the preceding claims, wherein, when storing (130), a time stamp of when the signal is obtained is also stored together with the buffered recording.

8. The method (100, 100') in accordance with any of the preceding claims, wherein the method (100, 100') includes the step of determining the current location when obtaining the signal, and the location determined is stored together with the buffered recording.

9. The method (100, 100') in accordance with any of the preceding claims, wherein the buffered recording is stored in a data-reduced manner; and/or
wherein the memory (44) is arranged externally.

10. A computer program having a program code for performing the method (100, 100') in accordance with any of claims 1 to 9 when the program runs on a computer.

11. A device (20, 20', 20", 20"') for generating a database (15), comprising:
a microphone (11) for receiving environmental noises;
a buffer for buffering the environmental noises for a migrating time window or deriving a set of parameters from the environmental noises and for buffering the set of parameters for the migrating time window in order to obtain a buffered recording;
an interface for obtaining a signal which identifies a signal class from a plurality of signal classes in the environmental noise; and
a memory (44) for storing the buffered recording, responsively to the signal, wherein the signal is received by user input means (24a, 24b), a button (24a, 24b) or a smart device;
wherein the device (20, 20', 20", 20"') is configured to repeat obtaining and storing in order to obtain the database (15) which comprises a plurality of buffered recordings for the same signal class.

12. The device (20, 20', 20", 20"') in accordance with claim 11, wherein the device (20, 20', 20", 20"') includes input means, a button or a smart device connected to the input interface; or
wherein the input interface is connected to a detector for determining the volume, a processor for identifying a control signal in the environmental noise, or a further device (20, 20', 20", 20"') for generating a database (15) at a neighboring position.

13. The device (20, 20', 20", 20'") in accordance with claim 11 or 12, wherein the device (20, 20', 20", 20'") includes position determining means via which a current position can be determined so that the current position can be stored in connection with the part or parameter of the buffered recording to be stored.

14. The device (20, 20', 20", 20'") in accordance with any of claims 11 to 13, wherein the buffer is a ring memory; and/or
wherein the device (20, 20', 20", 20"') comprises a communication interface via which the external memory (44) can be connected.

## Revendications

1. Procédé (100, 100') pour générer une base de données (15), aux étapes suivantes consistant à:
recevoir (110, 110') des bruits ambiants et mettre en mémoire-tampon les bruits ambiants pour une fenêtre de temps accompagnante ou dériver un ensemble de paramètres des bruits ambiants et mettre en mémoire-tampon l'ensemble de paramètres pour la fenêtre de temps accompagnante pour obtenir un enregistrement mis en mémoire-tampon;
obtenir (120) un signal qui identifie une classe de signaux parmi une pluralité de classes de signaux dans le bruit ambiant;
mémoriser (130), en réaction au signal, l'enregistrement mis en mémoire-tampon dans une mémoire; et
répéter les étapes d'obtention (120) et de mise en mémoire (130) pour obtenir la base de données (15) qui présente une pluralité d'enregistrements mis en mémoire-tampon pour la même classe de signaux;
dans lequel le signal est reçu de moyens d'entrée d'utilisateur (24a, 24b), d'un touche (24a, 24b) ou d'un dispositif intelligent.

2. Procédé (100, 100') selon la revendication 1, dans lequel il existe une dépendance temporelle entre le signal et la fenêtre de temps accompagnante de l'enregistrement mis en mémoire-tampon.

3. Procédé (100, 100') selon la revendication 2, dans lequel la dépendance temporelle consiste en ce que le début de la fenêtre de temps accompagnante se situe avant le moment du signal; ou
en ce que la fin de la fenêtre de temps accompagnante se situe au ou avant le moment du signal.

4. Procédé (100, 100') selon l'une des revendications précédentes, dans lequel le signal est reçu d'un détecteur destiné à déterminer l'intensité sonore, d'un processeur destiné à identifier un signal de commande dans le bruit ambiant ou d'un dispositif destiné à générer une base de données (15) à une position adjacente.

5. Procédé (100, 100') selon l'une des revendications précédentes, dans lequel la dérivation d'un ensemble de paramètres comporte le fait de déterminer une empreinte digitale audio pour les bruits ambiants mis en mémoire-tampon; et/ou
dans lequel la dérivation d'un ensemble de paramètres comporte le fait de déterminer les paramètres psycho-acoustiques de l'enregistrement mis en mémoire-tampon; ou dans lequel la dérivation d'un ensemble de paramètres comporte le fait de déterminer les paramètres psycho-acoustiques de l'enregistrement mis en mémoire-tampon, et dans lequel les paramètres psycho-acoustiques comprennent une intensité sonore, une netteté, une tonalité, une rugosité et/ou une intensité de fluctuation.

6. Procédé (100, 100') selon l'une des revendications précédentes, comportant le fait d'obtenir un autre signal qui identifie une autre classe de signaux parmi une pluralité de classes de signaux dans le bruit ambiant, dans lequel la mise en mémoire est effectuée en réaction à l'autre signal, de sorte que l'attribution de l'enregistrement mis en mémoire-tampon à la classe ou à l'autre classe de signaux soit maintenue.

7. Procédé (100, 100') selon l'une des revendications précédentes, dans lequel, pendant la mise en mémoire (130), un horodatage auquel est reçu le signal, est mémorisé ensemble avec l'enregistrement mis en mémoire-tampon.

8. Procédé (100, 100') selon l'une des revendications précédentes, dans lequel le procédé (100, 100') comporte l'étape consistant à déterminer l'emplacement actuel lors de la réception du signal et l'emplacement déterminé est mémorisé ensemble avec l'enregistrement mis en mémoire-tampon.

9. Procédé (100, 100') selon l'une des revendications précédentes, dans lequel l'enregistrement mis en mémoire-tampon est mémorisé de manière réduite en données; et/ou
dans lequel la mémoire (44) est disposée à l'extérieur.

10. Programme d'ordinateur avec un code de programme pour réaliser le procédé (100, 100') selon l'une des revendications 1 à 9 lorsque le programme est exécuté sur un ordinateur.

11. Dispositif (20, 20', 20", 20"') pour générer une base de données (15), aux moyens suivants:
un microphone (11) destiné à recevoir les bruits ambiants;
une mémoire-tampon destinée à mettre en mémoire-tampon les bruits ambiants pour une fenêtre de temps accompagnante ou dériver un ensemble de paramètres des bruits environnants et à mettre en mémoire-tampon l'ensemble de paramètres pour la fenêtre de temps accompagnante pour obtenir un enregistrement mis en mémoire-tampon;
une interface destinée à obtenir un signal qui identifie une classe de signaux parmi une pluralité de classes de signaux dans le bruit ambiant; et
une mémoire (44) destinée à mémoriser, en réaction au signal, l'enregistrement mis en mémoire-tampon, où le signal est reçu de moyens d'entrée d'utilisateur (24a, 24b), d'une touche (24a, 24b) ou d'un dispositif intelligent;
dans lequel le dispositif (20, 20', 2", 20"') est conçu pour répéter la réception et la mise en mémoire pour obtenir la base de données (15) qui présente une pluralité d'enregistrements mis en mémoire-tampon pour la même classe de signaux.

12. Dispositif (20, 20', 20", 20"') selon la revendication 11, dans lequel le dispositif (20, 20', 2", 20"') comporte des moyens d'entrée, une touche ou un dispositif intelligent qui est connecté à l'interface d'entrée; ou
dans lequel l'interface d'entrée est connectée à un détecteur destiné à déterminer l'intensité sonore, à un processeur destiné à identifier un signal de commande dans le bruit ambiant ou à un autre dispositif (20, 20', 20", 20'") destiné à générer une base de données (15) à une position adjacente.

13. Dispositif (20, 20', 20", 20"') selon la revendication 11 ou 12, dans lequel le dispositif (20, 20', 20", 20"') comporte des moyens de détermination de position par lesquels peut être déterminée une position actuelle, de sorte que la position actuelle puisse être mémorisée ensemble avec la partie à mémoriser ou les paramètres de l'enregistrement mis en mémoire-tampon.

14. Dispositif (20, 20', 20", 20"') selon l'une des revendications 11 à 13, dans lequel la mémoire-tampon est une mémoire annulaire; et/ou
le dispositif (20, 20', 20", 20"') présente une interface de communication par laquelle peut être connectée la mémoire (44) disposée à l'extérieur.
